(19) Europäisches Patentamt
European Patent Office
Office européen des brevets

(11) Numéro de publication : **0 343 024 B1**

# (12) FASCICULE DE BREVET EUROPEEN

(45) Date de publication du fascicule du brevet : **16.12.92 Bulletin 92/51**

(51) Int. Cl.$^5$ : **C08L 23/08,** C08L 23/10, C08K 5/15, C08K 5/17, C08L 63/00

(21) Numéro de dépôt : **89401051.1**

(22) Date de dépôt : **17.04.89**

## (54) Compositions polymères réticulées, leur procédé de fabrication et articles moulés obtenus.

(30) Priorité : **18.04.88 FR 8805066**

(43) Date de publication de la demande : **23.11.89 Bulletin 89/47**

(45) Mention de la délivrance du brevet : **16.12.92 Bulletin 92/51**

(84) Etats contractants désignés : **AT BE CH DE ES FR GB GR IT LI LU NL SE**

(56) Documents cités :
**EP-A- 0 247 580**
**WO-A-86/06395**
**WO-A-86/07078**

(73) Titulaire : **ELF ATOCHEM S.A.**
**4 & 8, Cours Michelet La Défense 10**
**F-92800 Puteaux (FR)**

(72) Inventeur : **Hert, Marius**
**21, Chaussée Brunehaut**
**F-62690 Estrée Cauchy (FR)**

(74) Mandataire : **Rochet, Michel et al**
**ELF ATOCHEM S.A. Département Propriété Industrielle 4-8, Cours Michelet La Défense 10 - Cedex 42**
**F-92091 Paris-La-Défense (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à une composition polymère à base d'au moins un polymère de propylène en mélange avec au moins un copolymère souple d'éthylène, le rapport en poids du (ou des) polymère(s) de propylène à (ou aux) copolymère(s) souple(s) d'éthylène se situant dans la plage de 15:85 à 50:50. La présente invention porte également sur un procédé de fabrication de cette composition ainsi que sur les articles moulés obtenus à partir de celle-ci.

Par « copolymères souples d'éthylène », on entend essentiellement des terpolymères d'éthylène, de (méth)acrylate d'alkyle et d'anhydride d'acide dicarboxylique insaturé, renfermant plus de 83% en moles d'éthylène, et possédant un module élastique en flexion inférieur à 100 MPa et, de préférence, inférieur à 30 MPa.

Les compositions polymères, également parfois désignées ci-après par le terme « alliages », constituées par les mélanges de polypropylène avec les terpolymères précités sont connues par le brevet européen n° 0 221 919. Ces alliages présentent l'inconvénient suivant : dès que la teneur en terpolymère dépasse 50% en poids, leur morphologie évolue vers des phases interpénétrées, puis vers une morphologie à matrice de terpolymère et nodules de polypropylène. Or, dans le domaine des phases interpénétrées, les morphologies sont sensibles aux gradients de cisaillement qui peuvent être appliqués lors de la mise en oeuvre ultérieure, et les propriétés mécaniques de l'alliage sont en général faibles et peu reproductibles.

Par ailleurs, on connaît, notamment par le brevet français n° 2 131 540 et par le brevet US-A-4 612 349, des copolymères réticulés de l'éthylène et d'un anhydride d'acide dicarboxylique insaturé, avec éventuellement un autre comonomère.

La Société déposante a maintenant constaté qu'en soumettant les terpolymères tels que définis ci-dessus à une réticulation chimique au moins partielle pendant la fabrication d'alliages avec des polymères de propylène, c'est-à-dire lors du malaxage des deux composants polymères, on obtient des compositions polymères dont les défauts mentionnés ci-dessus sont éliminés. Cette méthode de réticulation est désignée dans ce qui suit comme étant une « réticulation dynamique ».

Les compositions polymères résultantes se caractérisent par une morphologie non évolutive lors d'une mise en oeuvre ultérieure par injection ou extrusion et par des propriétés mécaniques améliorées. Elles se distinguent également par une tenue thermique améliorée, caractérisée par l'augmentation de la température de ramollissement Vicat, ou par l'augmentation du module élastique en torsion. Leur mémoire élastique est améliorée et se traduit par une déformation rémanente à la compression plus faible (généralement comprise entre 55% et 80% environ selon la norme ASTM D395 après 22 heures à 70°C).

Par ailleurs, ces compositions polymères se distinguent de celles décrites dans la demande de brevet européen n° 204 453, dans lequel le copolymère souple de l'éthylène est également soumis à une réticulation dynamique, entre autres par le remplacement de l'acide acrylique par un anhydride d'acide dicarboxylique insaturé, ce qui offre l'avantage de conduire à une meilleure compatibilité entre le polymère du propylène et le copolymère souple de l'éthylène.

La présente invention a donc pour objet une composition polymère à base d'un mélange de :
- 15 à 50% en poids environ d'un polymère de propylène ; et
- 50 à 85% en poids environ d'un copolymère souple d'éthylène,

caractérisée par le fait que ledit copolymère souple d'éthylène est un terpolymère (A) comprenant :
- de 83 à 92,7% environ en moles d'éthylène,
- de 7 à 14% environ en moles d'au moins un (méth)acrylate d'alkyle, dont le groupe alkyle a de 1 à 8 atomes de carbone ; et
- de 0,3 à 3% environ en moles d'au moins un anhydride d'acide dicarboxylique insaturé ; ou bien

un mélange comprenant, pour 100 parties en poids, au moins environ 70 parties en poids du terpolymère (A) et au plus environ 30 parties en poids d'au moins un copolymère (B) choisi parmi les copolymères d'éthylène comprenant :
- de 86 à 93% environ en moles d'éthylène ; et
- de 7 à 14% environ en moles d'au moins un monomère copolymérisable choisi parmi les (méth)acrylates d'alkyle dont le groupe alkyle a de 1 à 8 atomes de carbone ; et

les copolymères d'éthylène comprenant :
- de 88 à 93% environ en moles d'éthylène ; et
- de 7 à 12% environ en moles d'au moins une α-oléfine en $C_{-3}$-$C_{10}$,

lesdits copolymères d'éthylène/α-oléfine ayant une densité allant d'environ 0,875 à 0,905,
le terpolymère (A) ayant subi une réticulation dynamique au moins partielle, à l'aide d'un agent réticulant renfermant au moins une fonction capable de réagir avec la fonction anhydride dudit terpolymère (A).

De préférence, le rapport molaire des fonctions réactives de l'agent réticulant aux groupes anhydride du

terpolymère (A) est compris entre 0,5 et 2.

Les polymères de propylène qui peuvent être utilisés selon la présente invention comprennent notamment le polypropylène cristallin, les copolymères cristallins séquencés ou au hasard propylène-éthylène, les copolymères cristallins propylène-α-oléfine, l'oléfine possédant de 4 à 10 atomes de carbone, et les mélanges de ces polymères. Ceux-ci présentent habituellement un indice de fluidité se situant entre 0,5 et 20 dg/min., mesuré d'après la norme ASTM D1283, à 230°C, sous 2,16 kg.

Comme acrylates d'alkyle qui entrent dans la constitution des polymères (A) et (B), on peut citer notamment l'acrylate de n-butyle, l'acrylate d'éthyle, l'acrylate d'éthyl-2 hexyle et l'acrylate d'isobutyle.

Comme anhydrides d'acides dicarboxyliques insaturés entrant dans la constitution des terpolymères (A), on peut citer l'anhydride maléique, l'anhydride itaconique et l'anhydride phtalique, plus particulièrement, l'anhydride maléique.

Conformément à un premier mode de réalisation de l'invention, l'agent réticulant renferme au moins un groupement époxyde.

L'agent réticulant peut alors être un composé polyépoxydique de formule générale :

```
A - (CH -- CHR)
               n
        \    /
          O
```

dans laquelle A est un groupe polyfonctionnel de valence n≧2 et R est un radical hydrocarboné ou un atome d'hydrogène. On peut citer, à titre d'exemples, les polyglycidyléthers de composés polyhydroxylés. Parmi ceux-ci, on choisit, soit les composés polyépoxydes de type aromatique (tels que ceux dérivés du Bisphénol A), soit les composés polyépoxydes de type aliphatique, particulièrement les polyglycidyléthers de polyalcools, tels que les diglycidyléthers des α-ω diols comme le diglycidyléther du butanediol, de l'hexanediol, du paracyclohexyldiméthanol, du néopentylglycol, tels que les triglycidyléthers de triols comme le triglycidyléther du triméthylolpropane, le triglycidyléther du glycérol, tels que les tétraglycidyléthers de tétrols comme le tétraglycidyléther du pentaérythritol. Parmi les composés provenant de l'époxydation de composés oléfiniques, on choisit avantageusement l'huile de soja époxydée.

On peut également utiliser, comme agent réticulant à fonctions époxy, un copolymère d'au moins une oléfine en $C_2$-$C_8$ avec au moins un monomère insaturé renfermant un groupement époxy, tel que notamment un acrylate ou méthacrylate de glycidyle. Un tel copolymère peut être obtenu, soit par greffage du monomère insaturé sur la chaîne de (co)polymère d'oléfine, soit directement par copolymérisation du monomère insaturé avec l'oléfine en $C_2$-$C_8$. Un tel copolymère peut en outre comprendre des motifs dérivés d'un autre monomère insaturé tel qu'un acrylate ou méthacrylate d'alkyle. De tels copolymères ont été décrits notamment dans le brevet US-A- 3 383 372.

Les agents réticulants époxydiques sont avantageusement associés à au moins un activateur de la réaction entre leurs fonctions époxyde et les fonctions anhydride du terpolymère (A). De tels activateurs sont bien connus et comprennent, par exemple, les amines tertiaires, les sels d'ammonium quaternaire, la triphénylphosphine, les alkyldithiocarbamates de zinc et le méthylimidazole. Le rapport molaire de l'agent activateur aux groupes anhydride du terpolymère (A) est généralement au moins égal à 0,5, de préférence, au moins égal à 1.

A titre de système de réticulation époxydique particulier, on peut mentionner le diglycidyl éther de bisphénol A associé à un mélange d'amines tertiaires ayant de 16 à 18 atomes de carbone, connues sous l'appellation de diméthylsuifamine.

Conformément à un second mode de réalisation de l'invention, l'agent réticulant renferme au moins deux groupes amine primaire et/ou secondaire, de préférence amine primaire. A titre d'exemples de tels composés, on peut citer l'hexaméthylènediamine, les polyoxyéthylènediamines, les polyoxypropylènediamines, les polyoxypropylènetriamines et la diphénylsulfonediamine. On peut également mentionner les polyamides à fonctions amine libres.

Des polyamides utilisables sont notamment des polyamides obtenus à partir de (a) 35 à 49,5% en mole d'acide gras dimère, (b) 0,5 à 15% en mole d'acide gras monomère d'une longueur de chaîne de 12 à 22 atomes de carbone, (c) 2 à 35% en mole de polyétheramine de formule générale : $H_2N - R_1 - O - (RO)_x - R_2 - NH_2$ dans laquelle x représente un nombre compris entre 8 et 80, en particulier, entre 8 et 40 ; $R_1$ et $R_2$ représentent des restes hydrocarbonés, identiques ou différents, aliphatiques et/ou cycloaliphatiques ; et R représente un reste hydrocarboné aliphatique éventuellement ramifié, possédant 1 à 6 atomes de carbone, et (d) 15 à 48% en mole de diamine aliphatique renfermant 2 à 40 atomes de carbone dans le squelette carboné, les acides

gras dimères pouvant être remplacés jusqu'aux 2/3 par des acides dicarboxyliques aliphatiques possédant 4 à 12 atomes de carbone ; et des polyamides obtenus à partir de (a) 20 à 49,5% en mole d'acides gras dimères, (b) 0,5 à 15% en mole d'acides gras monomères d'une longueur de chaîne de 12 à 22 atomes de carbone ; et (c) jusqu'à 20 à 55% en mole d'une amine portant au moins deux groupes amino primaires et possédant 2 à 40 atomes de carbone dans le squelette carboné, les acides gras dimères pouvant être remplacés jusqu'aux 2/3 par des acides dicarboxyliques aliphatiques possédant 4 à 12 atomes de carbone. Ces polyamides présentent avantageusement des groupes terminaux amino, leur indice d'amine allant de 2 à 15, en particulier de 4 à 10.

Conformément à un troisième mode de réalisation de la présente invention, l'agent réticulant renferme au moins deux fonctions alcool ou thiol. On peut citer en particulier des diols, tels que l'éthylène glycol, le propylène glycol et leurs polymères. L'agent réticulant peut également être porteur simultanément d'au moins une fonction alcool ou thiol et d'au moins une fonction amine. Comme agents réticulants de ce type, on peut mentionner la diéthanolamine et la monoéthanolamine.

Les compositions selon l'invention présentent généralement un taux de matières extractibles à 23°C par le cyclohexane, ce taux manifestant leur degré de réticulation, compris entre 80% et 100% environ.

La composition selon l'invention peut renfermer jusqu'à 20 parties en poids environ, pour 100 parties en poids des polymères totaux, d'au moins une charge minérale, choisie notamment parmi le mica, le noir de carbone, la craie, le talc et le kaolin. Elle peut également renfermer jusqu'à 30 parties en poids environ, pour 100 parties en poids des polymères totaux, d'au moins une huile plastifiante compatible avec le copolymère d'éthylène. Parmi ces plastifiants, on peut citer les huiles de paraffines et d'isoparaffines, les huiles naphténiques, aromatiques et les phtalates d'alkyle.

La préparation des compositions polymères de l'invention est effectuée par malaxage des constituants polymères, de l'agent de réticulation et des additifs éventuels, en mélangeurs internes ou en malaxeurs en continu, à double vis ou comalaxeurs, à une température généralement comprise entre 190 et 240°C, le temps de séjour dans le dispositif de malaxage étant généralement supérieur à 2 minutes. L'agent de réticulation peut être introduit dans le malaxeur par différentes techniques connues : lorsque l'agent de réticulation est liquide, on peut l'introduire directement par pompage dans le dispositif de malaxage ou bien on peut constituer un mélange-maître en dispersant cet agent dans le copolymère (B) dans le cas où un tel copolymère est présent ; dans le cas où l'agent de réticulation est une matière pulvérulente, on peut réaliser un enrobage à froid de granulés de polymères par un mélange dudit agent de réticulation et d'une charge pulvérulente, telle que la craie.

Enfin un autre objet de la présente invention consiste en des objets moulés obtenus à partir d'une composition telle que décrite précédemment, par une technique de transformation par injection-moulage, extrusion, extrusion-soufflage etc. De tels articles trouvent des applications particulièrement intéressantes dans les domaines suivants : gainage de câbles et de tubes, par extrusion ; soufflets et tubulures obtenus par extrusion-soufflage, notamment dans le domaine de l'industrie automobile, moulages par injection, joints par moulages par injection.

La présente invention sera maintenant décrite plus en détail avec référence aux Exemples et Exemples Comparatifs. Dans ces derniers, les pourcentages sont donnés en poids sauf indication contraire.

- Les indices de fluidité des polymères du propylène ont été calculés selon la norme ASTM D1283, à la température indiquée, sous 2,16 kg.
- Les mesures de résistance à la rupture et d'allongement à la rupture ont été effectuées d'après la norme ASTM D638 : à partir du mélange granulaire obtenu après malaxage, on réalise, par moulage par injection, à une température de résine de 220°C, des plaques de 2 mm d'épaisseur, dans lesquelles on découpe des éprouvettes de traction ; on distingue alors la découpe dans le sens d'injection (L) et la découpe perpendiculairement au sens d'injection (T).
- Les mesures de déformation rémanente à la compression ont été effectuées selon la norme ASTM D 395 après 22 heures à 70°C.
- Les mesures de température de ramollissement Vicat ont été effectuées selon la norme ASTM D1525.
- Le module élastique en torsion à 100° a été calculé selon la norme ISO 150 527.
- La réticulation des terpolymères (A) de l'invention a été mise en évidence par une extraction au cyclohexane à 23°C, pendant 48 heures de l'alliage, suivie d'une mesure du taux de matières extractibles (gel) par évaporation du solvant.

Les résultats des mesures effectuées aux Exemples 1 à 5 et aux Exemples comparatifs correspondants figurent dans le Tableau 1.

<u>Exemple Comparatif 1</u>

Dans un comalaxeur BUSS PR 46, on mélange, en continu, à une température de 205°C, un homopolymère

du propylène présentant un indice de fluidité (IF) de 4 g/10 minutes (à 230°C), et un terpolymère comprenant :
- 90,3% en moles d'éthylène;
- 9,0% en moles d'acrylate de butyle ; et
- 0,7% en moles d'anhydride maléique,

ce terpolymère présentant un IF de 9,5 g/10 minutes (190°C), une température de fusion de 67°C et une cristallinité inférieure à 5%, le rapport pondéral polypropylène/terpolymère étant de 50/50. Ce mélange est récupéré sous la forme de granulés.

Exemple 1

On procède comme à l'Exemple Comparatif 1, excepté que l'on incorpore au mélange polypropylène/terpolymère, 1 % de diéthanolamine par rapport au terpolymère.

Exemple Comparatif 2

On procède comme à l'Exemple Comparatif 1, excepté que le terpolymère est un terpolymère comprenant :
- 89,4% en moles d'éthylène ;
- 9,2% en moles d'acrylate d'éthyle ; et
- 1,2% en moles d'anhydride maléique,

et présentant un IF de 33,2 g/10 minutes (à 190°C), et une température de fusion de 70°C.

Exemple 2

On procède comme à l'Exemple Comparatif 2, excepté que l'on incorpore au mélange polypropylène/terpolymère, 1 % de diéthanolamine par rapport au terpolymère.

Exemple Comparatif 3

On procède comme à l'Exemple Comparatif 2, excepté que le rapport pondéral polypropylène/terpolymère est de 30/70.

Exemple 3

On procède comme à l'Exemple Comparatif 3, excepté que l'on incorpore au mélange 1% de diéthanolamine par rapport au terpolymère.

Exemple Comparatif 4

Dans un mélangeur BUSS PR 46, on mélange, à une température de 205°C, 50 parties d'un copolymère statistique du propylène, présentant une température de fusion comprise entre 150 et 158°C et un IF de 10-15 g/10 minutes (à 230°C), et 50 parties du terpolymère défini à l'Exemple Comparatif 2.

Exemple 4

On procède comme à l'Exemple Comparatif 4, excepté que les 50 parties de terpolymère sont remplacées par un mélange de :
- 40 parties en poids du terpolymère défini à l'Exemple Comparatif 2 ; et
- 10 parties en poids du copolymère comprenant :
    - 91,4% en moles d'éthylène ; et
    - 8,6% en moles d'acrylate de n-butyle,

mélange auquel on incorpore 4 parties en poids de diéthanolamine pour 100 parties en poids du copolymère précité.

Exemple Comparatif 5

On procède comme à l'Exemple Comparatif 4, excepté que le rapport pondéral de mélange polypropylène/terpolymère est de 30/70.

Exemple 5

On procède comme à l'Exemple 4, excepté que le rapport pondéral de mélange polypropylène/terpolymère/copolymère est de 30/56/14.

Tableau 1

| | Ex,Comp,1 | Ex,1 | Ex,Comp,2 | Ex,2 | Ex,Comp,3 | Ex,3 | Ex,Comp,4 | Ex,4 | Ex,Comp,5 | Ex,5 |
|---|---|---|---|---|---|---|---|---|---|---|
| Résistance à la rupture (en MPa) | | | | | | | | | | |
| L | 14,4 | 18,3 | 14,8 | 20,0 | 10,2 | 14,2 | 13,0 | 16,9 | 9,9 | 12,5 |
| T | 11,4 | 18,4 | 10,7 | 16,4 | 5,9 | 10,4 | 9,3 | 20,6 | 10,2 | 15,1 |
| Allongement (%) | | | | | | | | | | |
| L | 96 | 184 | 68 | 246 | 94 | 162 | 125 | 341 | 220 | 241 |
| T | 379 | 426 | 107 | 295 | 52 | 187 | 160 | 684 | | |
| Température de Ramollissement Vicat (°C) | 72 | 97 | 60 | 104 | 42 | 62 | 68 | 81 | 52 | 62 |
| Dureté SHORE | | | 50D | 52D | 81A | 85A | 75A | 80A | 72A | 79A |
| Taux de gel (%) | | | | | | | * 65 | 96 | | |

* La fraction insoluble (ou taux de gel) est constituée de la presque totalité du propylène et d'une partie plus ou moins importante du copolymère souple, assez difficilement extractible, car sa dissolution dans le cyclohexane est gênée par la présence du polypropylène. Ceci explique le taux de gel relativement élevé de cet exemple comparatif, ainsi du reste que de ceux qui vont suivre.

Exemple Comparatif 6

Dans un malaxeur BUSS, on mélange, à une température de 205°C, le polypropylène de l'Exemple 4 et le terpolymère éthylène-acrylate d'éthyle-anhydride maléique de l'Exemple 1.

Les résultats des mesures effectuées figurent au Tableau 2.

Exemple 6

On procède comme à l'Exemple Comparatif 6, excepté que l'on ajoute au mélange de base du polypropylène de l'Exemple 4 et du terpolymère de l'Exemple 1 :

- 3 % de diglycidyléther de bisphénol A (masse moléculaire : 340) par rapport au terpolymère ; et
- 3 % de diméthylsuifamine, par rapport au terpolymère.

Les résultats des mesures effectuées figurent au Tableau 2.

Tableau 2

| | Ex. Comp. 6 | Ex. 6 |
|---|---|---|
| Déformation rémanente à la compression (70°C, 22 heures) | 100 | 77 |
| Résistance à la rupture (L) (MPa) | 13 | 17 |
| Taux de gel (%) | 70 | 97 |

Les résultats des mesures effectuées aux Exemples 7 à 10 et aux Exemples Comparatifs correspondants figurent au Tableau 3.

Exemple Comparatif 7

On procède comme à l'Exemple Comparatif 1, excepté que le rapport pondéral polypropylène/terpolymère est de 40/60.

Exemple 7

On procède comme à l'Exemple Comparatif 7, excepté que l'on utilise un mélange polypropylène/terpolymère/diéthanolamine dans un rapport pondéral de 39/60/1.

Exemple Comparatif 8

On procède comme à l'Exemple Comparatif 1, excepté que le rapport pondéral polypropylène/terpolymère est de 20/80.

Exemple 8

On procède comme à l'Exemple Comparatif 8, excepté que l'on utilise un mélange polypropylène/terpolymère/copolymère de l'Exemple 4/diéthanolamine, dans un rapport pondéral de 20/64/15,35/0,65.

Exemple Comparatif 9

On procède comme à l'Exemple Comparatif 1, excepté que l'on utilise, comme polymère du propylène, un homopolymère ayant un IF de 12 dg/min. (230°C), et un point de fusion de 168°C, le rapport pondéral polypropylène/terpolymère étant de 40/60.

Exemple 9

On procède comme à l'Exemple Comparatif 9, excepté que l'on utilise le mélange ayant la formulation suivante :

| | |
|---|---|
| Polypropylène de l'Ex.Comp. 9 ............. | 40 (% en poids) |
| Terpolymère de l'Ex.Comp. 9 ............... | 42 |
| Copolymère linéaire éthylène-propylène-butène de masse volumique 0,900 $g/cm^3$, contenant 3,4% en moles de butène, 5,4% en moles de propylène, d'IF 1,1 dg/min. (190°C) .................. | 12 |
| Craie ................................... | 3,6 |
| Résine époxy ............................ | 2,1 |
| Diméthylsulfamine ....................... | 0,3 |

Exemple Comparatif 10

On procède comme à l'Exemple Comparatif 9, excepté que le rapport pondéral polypropylène/terpolymère est de 30/70.

Exemple 10

On procède comme à l'Exemple 9, excepté que les pourcentages en poids des constituants du mélange, pris dans le même ordre, sont les suivants :
30;50;14;4,2;3,5;0,3.

Tableau 3

| | Ex,Comp,7 | Ex,7 | Ex,Comp,8 | Ex,8 | Ex,Comp,9 | Ex,9 | Ex,Comp,10 | Ex, 10 |
|---|---|---|---|---|---|---|---|---|
| Résistance à la rupture (en MPa) | | | | | | | | |
| L | 11,0 | 18,6 | 8,2 | 12,5 | 15,9 | 16,1 | 10,4 | 15,8 |
| T | 11,2 | 15,4 | 6,4 | 10,5 | 12,7 | 12,5 | 10,3 | 13,3 |
| Allongement à la rupture (%) | | | | | | | | |
| L | 180 | 489 | 315 | 448 | 80 | 244 | 157 | 340 |
| T | | | | | 83 | 267 | | |
| Déformation rémanente à la compression (22 heures, 70°C) (%) | 100 | 70 | 100 | 65 | 100 | 59 | 100 | 59 |
| Module de torsion à 100° (en MPa) | 0,2 | 15 | <0,1 | 3 | | | | |
| Dureté SHORE A | 86 | 89 | | 82 | | 98 | | 96 |
| Taux de gel | 60 | 92 | | | | | | |

Les résultats des mesures effectuées aux Exemples 11 et 12 et aux Exemples Comparatifs correspondants figurent dans le Tableau 4.

Exemple Comparatif 11

On procède comme à l'Exemple Comparatif 1, excepté qu'on utilise le polypropylène de l'Exemple 4.

Exemple 11

On procède comme à l'Exemple Comparatif 11, excepté qu'on utilise un mélange ayant la formulation suivante :

| | |
|---|---|
| Polypropylène de l'Ex. Comp. 11 ........... | 50 (% en poids) |
| Terpolymère de l'Ex. Comp. 11 ............. | 40 |
| Terpolymère éthylène/acrylate d'éthyle/ méthacrylate de glycidyle (composition en moles 96/2/2), ayant un IF de 8 dg/min. (à 190°C) .................... | 10 |
| Diméthylsulfamine ........................ | 0,75 |

Exemple Comparatif 12

On procède comme à l'Exemple Comparatif 11, excepté que le rapport pondéral polypropylène/ terpolymère est de 30/70.

Exemple 12

On procède comme à l'Exemple 11, excepté que le pourcentage en poids de constituants du mélange, pris dans le même ordre, sont les suivants : 30;56;14;1,0.

Tableau 4

| | Ex.Comp.11 | Ex.11 | Ex.Comp.12 | Ex.12 |
|---|---|---|---|---|
| Température de ramollissement Vicat (°C) | 68 | 97 | 52 | 60 |
| Déformation rémanente à la compression (22 heures, 70°C) (%) | 100 | 75 | 100 | 65 |

## Revendications

1. Composition polymère à base d'un mélange de :
   - 15 à 50% en poids d'un polymère de propylène ; et
   - 50 à 85% en poids d'un copolymère souple d'éthylène,

   caractérisée par le fait que ledit copolymère souple d'éthylène est un terpolymère (A) comprenant :
   - de 83 à 92,7% en moles d'éthylène,
   - de 7 à 14% en moles d'au moins un (méth)acrylate d'alkyle, dont le groupe alkyle a de 1 à 8 atomes de carbone ; et
   - de 0,3 à 3% en moles d'au moins un anhydride d'acide dicarboxylique insaturé ; ou bien

   un mélange comprenant, pour 100 parties en poids, au moins 70 parties en poids du terpolymère (A) et

au plus 30 parties en poids d'au moins un copolymère (B) choisi parmi les copolymères d'éthylène comprenant :

- de 86 à 93% en moles d'éthylène ; et
- de 7 à 14% en moles d'au moins un monomère copolymérisable choisi parmi les (méth)acrylates d'alkyle dont le groupe alkyle a de 1 à 8 atomes de carbone ; et

les copolymères d'éthylène comprenant :

- de 88 à 93% en moles d'éthylène ; et
- de 7 à 12% en moles d'au moins une α-oléfine en $C_3$-$C_{10}$;

lesdits copolymères d'éthylène/α-oléfine ayant une densité comprise entre 0,875 et 0,905,
ledit terpolymère (A) ayant subi une réticulation dynamique au moins partielle, à l'aide d'un agent réticulant renfermant au moins une fonction capable de réagir avec la fonction anhydride dudit terpolymère (A).

2. Composition polymère selon la revendication 1, caractérisée par le fait que le rapport molaire des fonctions réactives de l'agent réticulant aux groupes anhydride du terpolymère (A) est compris entre 0,5 et 2.

3. Composition polymère selon l'une des revendications 1 et 2, caractérisée par le fait que le polymère de propylène est un polymère qui présente un indice de fluidité se situant entre 0,5 et 20 dg/min., mesuré d'après la norme ASTM D1283, à 230°C, sous 2,16 kg.

4. Composition polymère selon l'une des revendications 1 à 3, caractérisée par le fait que l'anhydride d'acide dicarboxylique insaturé entrant dans la constitution des terpolymères (A) est choisi parmi l'anhydride maléique, l'anhydride itaconique et l'anhydride phtalique.

5. Composition polymère selon l'une des revendications 1 à 4, caractérisée par le fait que l'agent réticulant renferme au moins une fonction époxyde.

6. Composition selon la revendication 5, caractérisée par le fait que l'agent réticulant est choisi parmi les composés polyépoxydiques de formule générale :

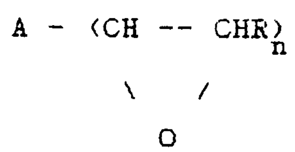

dans laquelle A est un groupe polyfonctionnel de valence n≧2 et R est un radical hydrocarboné ou un atome d'hydrogène, et les copolymères d'au moins une oléfine en $C_2$-$C_8$ avec au moins un monomère insaturé renfermant un groupement époxy.

7. Composition selon l'une des revendications 5 et 6, caractérisée par le fait que l'agent réticulant époxydique est associé à au moins un activateur de la réaction entre ses fonctions époxyde et les fonctions anhydride du terpolymère (A), le rapport molaire dudit agent activateur aux groupes anhydride du terpolymère (A) étant au moins égal à 0,5.

8. Composition selon l'une des revendications 1 à 4, caractérisée par le fait que l'agent réticulant renferme au moins deux fonctions amine primaire et/ou secondaire.

9. Composition selon la revendication 8, caractérisée par le fait que l'agent réticulant est choisi parmi l'hexaméthylènediamine, les polyoxyéthylènediamines, les polyoxypropylènediamines, les polyoxypropylènetriamines, la diphénylsulfonediamine, et les polyamides à fonctions amine libres.

10. Composition selon l'une des revendications 1 à 4, caractérisée par le fait que l'agent réticulant renferme au moins deux fonctions alcool ou thiol, ou bien au moins une fonction alcool ou thiol et au moins une fonction amine.

11. Composition selon l'une des revendications 1 à 10, caractérisée par le fait qu'elle renferme jusqu'à 20 parties en poids, pour 100 parties en poids des polymères totaux, d'au moins une charge minérale.

12. Composition selon l'une des revendications 1 à 11, caractérisée par le fait qu'elle referme jusqu'à 30 parties en poids, pour 100 parties en poids des polymères totaux, d'au moins une huile plastifiante compatible avec le copolymère d'éthylène.

**13.** Procédé de fabrication de la composition polymère, telle que définie à l'une des revendications 1 à 12, caractérisée par le fait qu'on effectue le malaxage des constituants polymères, de l'agent de réticulation et des additifs éventuels, à une température comprise entre 190°C et 240°C, le temps de séjour dans le dispositif de malaxage étant supérieur à 2 minutes.

**14.** Articles moulés obtenus à partir de la composition polymère telle que définie à l'une des revendications 1 à 13.

## Patentansprüche

**1.** Polymerzusammensetzung auf der Grundlage eines Gemisches aus:
- 15 bis 50 Gew.% eines polymeren des Propylens und
- 50 bis 85 Gew.% eines weichen Copolymeren des Ethylens,

dadurch gekennzeichnet, daß das genannte weiche Ethylencopolymere ein Terpolymeres (A) ist, das enthält:
- 83 bis 92,7 Mol% Ethylen,
- 7 bis 14 Mol% wenigtens eines Alkyl(meth)acrylats, dessen Alkylgruppe 1 bis 8 Kohlenstoffatome enthält und
- 0,3 bis 3 Mol% wenigstens eines ungesättigten Anhydrids einer Dicarbonsäure oder

ein Gemisch, das auf 100 Gewichtsteile wenigstens 70 Gewichtsteile des Terpolymeren (A) und höchstens 30 Gewichtsteile wenigstens eines Copolymeren (B) enthält, das aus den Ethylencopolymeren ausgewählt sind, die enthalten:
- 86 bis 93 Mol% Ethylen und
- 7 bis 14 Mol% wenigstens eines copolymerisierbaren Monomeren, ausgewählt aus der Gruppe der Alkyl(meth)acrylate mit 1 bis 8 Kohlenstoffatomen in der Alkylgruppe und

den Ethylencopolymeren enthaltend:
- 88 bis 93 Mol% Ethylen und
- 7 bis 12 Mol% wenigstens eines $C_3$-$C_{10}$-$\alpha$-Olefins,

wobei die Copolymeren von Ethylen mit dem $\alpha$-Olefin eine Dichte zwischen 0,875 und 0,905 besitzen und das Terpolymere (A) einer wenigstens teilweisen dynamischen Vernetzung mit Hilfe eines Vernetzungsmittels unterzogen wurde, das wenigstens eine Funktion besitzt, die mit der Anhydridgruppe des genannten Terpolymeren (A) reagieren kann.

**2.** Polymerzusammensetzung nach Anspruch 1, dadurch gekennzeichnet, daß das Molverhältnis der reaktiven Gruppen des Vernetzungsmittels zu den Anhydridgruppen des Terpolymeren (A) 0,5 bis 2 beträgt.

**3.** Polymerzusammensetzung nach einem der Ansprüche 1 und 2, dadurch gekennzeichnet, daß das Propylenpolymere ein Polymeres mit einer Weichheitszahl zwischen 0,5 und 20 dg/min, gemessen nach der ASTM-Norm D1283 bei 230°C unter 2,16 kg.

**4.** Polymerzusammensetzung nach einem der Ansprüche 1 bis 3, dadurch gekennzeichnet, daß das in die Konstitution des Terpolymeren (A) eingebaute ungesättigte Anhydrid einer Dicarbonsäure unter Malein-, Itacon- und Phtalsäure-Anhydrid ausgewählt ist.

**5.** Polymerzusammensetzung nach einem der Ansprüche 1 bis 4, dadurch gekennzeichnet, daß das Vernetzungsmittel wenigstens eine Epoxidgruppe enthält.

**6.** Zusammensetzung nach Anspruch 5, dadurch gekennzeichnet, daß das Vernetzungsmittel aus Polyepoxyverbindungen der allgemeinen Formel:

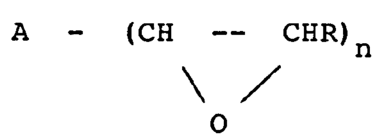

ausgewählt ist, in der A eine polyfunktionelle Gruppe der Wertigkeit n ≧ 2, R einen Kohlenwasserstoffrest oder ein Wasserstoffatom und die Copolymeren wenigstens eines $C_2$-$C_8$ Olefins mit wenigstens einem ungesättigten Monomeren mit einer Epoxygruppe bedeuten.

7. Polymerzusammensetzung nach einem der Ansprüche 5 oder 6, dadurch gekennzeichnet, daß das Vernetzungsmittel an wenigstens einen Aktivator für die Reaktion zwischen den Epoxygruppen und den Anhydridgruppen des Terpolymeren (A) gebunden ist, wobei das Molverhältnis des Aktivators zu den Anhydridgruppen des Terpolymeren (A) wenigstens gleich 0,5 ist.

8. Zusammensetzung nach einem der Ansprüche 1 bis 4, dadurch gekennzeichnet, daß das Vernetzungsmittel wenigstens zwei primäre und/oder sekundäre Aminogruppen enthält.

9. Zusammensetzung nach Anspruch 8, dadurch gekennzeichnet, daß das Vernetzungsmittel unter der Gruppe von Hexamethylendiamin, Polyoxyethylendiamin, Polyoxypropylendiamin, Polyoxypropylentriamin, Diphenylsulfondiamin und den Polyamiden mit freien Aminogruppen ausgewählt ist.

10. Zusammensetzung nach einem der Ansprüche 1 bis 4, dadurch gekennzeichnet, daß das Vernetzungsmittel wenigstens zwei Alkohol- oder Thiolfunktionen oder wenigstens eine Alkohol- oder Thiol- und wenigstens eine Aminogruppe enthält.

11. Zusammensetzung nach einem der Ansprüche 1 bis 10, dadurch gekennzeichnet, daß sie bis zu 20 Gewichtsteile eines mineralischen Füllstoffes, bezogen auf 100 Gewichtsteile der gesamten Polymeren, enthält.

12. Zusammensetzung nach einem der Ansprüche 1 bis 11, dadurch gekennzeichnet, daß sie bezogen auf 100 Gewichtsteile der Gesamtpolymeren bis zu 30 Gewichtsteile wenigstens eines weichmachenden mit dem Ethylencopolymeren verträglichen Öls enthält.

13. Verfahren zur Herstellung der Polymerzusammensetzung, wie sie in einem der Ansprüche 1 bis 12 definiert ist, dadurch gekennzeichnet, daß das Kneten der Polymerbestandteile, des Vernetzungsmittels und der eventuellen Additive bei einer Temperatur zwischen 190°C und 240°C durchgeführt wird, wobei die Verweilzeit im Kneter mehr als 2 Minuten beträgt.

14. Formteile erhalten aus Polymerzusammensetzung, wie sie in einem der Ansprüche 1 bis 13 definiert sind.

## Claims

1. Polymer composition based on a mixture of :
   - 15 to 50% by weight of a propylene polymer; and
   - 50 to 85% by weight of a flexible ethylene copolymer,

   characterized by the fact that the said flexible ethylene copolymer is a terpolymer (A) comprising:
   - from 83 to 92.7 mol% of ethylene,
   - from 7 to 14 mol% of at least one alkyl (meth)acrylate, whose alkyl group has from 1 to 8 carbon atoms; and
   - from 0.3 to 3 mol% of at least one unsaturated dicarboxylic anhydride; or else

   a mixture comprising, for 100 parts by weight, at least 70 parts by weight of the terpolymer (A) and at most 30 parts by weight of at least one copolymer (B) selected from ethylene copolymers comprising:
   - from 86 to 93 mol% of ethylene; and
   - from 7 to 14 mol% of at least one copolymerizable monomer selected from alkyl (meth)acrylates whose alkyl group has from 1 to 8 carbon atoms; and

   ethylene copolymers comprising:
   - 88 to 93 mol% of ethylene; and
   - from 7 to 12 mol% of at least one $C_3$-$C_{10}$ $\alpha$-olefin,

   the said ethylene/$\alpha$-olefin copolymers having a density in the range of 0.875 to 0.905,
   the said terpolymer (A) having undergone at least a partial dynamic crosslinking, using a crosslinking agent containing at least one functional group capable of reacting with the anhydride functional group of the said terpolymer (A).

**2.** Polymer composition according to Claim 1, characterized by the fact that the molar ratio of the reactive functional groups of the crosslinking agent to the anhydride groups of the terpolymer (A) is between 0.5 and 2.

**3.** Polymer composition according to one of Claims 1 and 2, characterized by the fact that the propylene polymer is a polymer which has a melt flow index lying between 0.5 to 20 dg/min, measured in accordance with the standard ASTM D1283, at 230°C, under 2.16 kg.

**4.** Polymer composition according to one of Claims 1 to 3, characterized by the fact that the unsaturated dicarboxylic anhydride from which the terpolymers (A) are constituted is selected from maleic anhydride, itaconic anhydride and phthalic anhydride.

**5.** Polymer composition according to one of Claims 1 to 4, characterized by the fact that the crosslinking agent contains at least one epoxide functional group.

**6.** Composition according to Claim 5, characterized by the fact that the crosslinking agent is selected from polyepoxide compounds of the general formula:

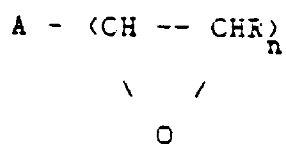

in which A is a polyfunctional group of valence $n \geqq 2$ and R is a hydrocarbon radical or a hydrogen atom, and copolymers of at least one $C_2$-$C_8$ olefin with at least one unsaturated monomer containing an epoxy group.

**7.** Composition according to one of Claims 5 and 6, characterized by the fact that the epoxide crosslinking agent is combined with at least one activator of the reaction between its epoxide functional groups and the anhydride functional groups of the terpolymer (A), the molar ratio of the said activating agent to the anhydride groups of the terpolymer (A) being at least equal to 0.5.

**8.** Composition according to one of Claims 1 to 4, characterized by the fact that the crosslinking agent contains at least two primary and/or secondary amine functional groups.

**9.** Composition according to Claim 8, characterized by the fact that the crosslinking agent is selected from hexamethylenediamine, polyoxyethylenediamines, polyoxypropylenediamines, polyoxyropylenetriamines, diphenylsulphonediamine, and polyamides having free amine functional groups.

**10.** Composition according to one of Claims 1 to 4, characterized by the fact that the crosslinking agent contains at least two alcohol or thiol functional groups or else at least one alcohol or thiol functional group and at least one amine functional group.

**11.** Composition according to one of Claims 1 to 10, characterized by the fact that it contains up to 20 parts by weight, per 100 parts by weight of the total polymers, of at least one mineral filler.

**12.** Composition according to one of Claims 1 to 11, characterized by the fact that it contains up to 30 parts by weight, per 100 parts by weight of the total polymers, of at least one plasticizing oil which is compatible with the ethylene copolymer.

**13.** Process for the production of the polymer composition, as defined in one of Claims 1 to 12, characterized by the fact that kneading of the polymer constituents, the crosslinking agent and optional additives is carried out at a temperature of between 190°C and 240°C, the residence time in the kneading apparatus being more than 2 minutes.

**14.** Moulded articles obtained from the polymer composition as defined in one of Claims 1 to 13.